# EUROPEAN PATENT SPECIFICATION

(11) **EP 2 193 732 B1**
(45) Date of publication and mention of the grant of the patent: **29.08.2012**
(21) Application number: 09178004.9
(22) Date of filing: 04.12.2009
(51) Int. Cl.: A47J 27/62, A47J 27/21

(54) **Domestic cooking appliance comprising a device for the detection of the boiling moment of liquids**
Haushaltsgargerät mit einer Vorrichtung zur Erkennung des Siedemoments von Flüssigkeiten
Appareil de cuisson domestique avec un dispositif de détection du moment d'ébullition de liquides

(30) Priority: 08.12.2008 PL 38674008
(43) Date of publication of application: 09.06.2010
(73) Proprietor: FagorMastercook, S.A., 51-130 Wroclaw (PL)
(72) Inventor: Bicz, Wieslaw, 50-238, Wroclaw (PL); Srednicki, Filip, 54-142, Wroclaw (PL); Wydro, Piotr, 51-662, Wroclaw (PL)
(74) Representative: Igartua, Ismael

(56) References cited:
- WO-A2-2009/060192
- DE-A1- 3 410 465
- JP-A- 2005 050 713

## Description

The invention relates to a domestic cooking appliance comprising a device for the detection of the boiling moment of liquids indicating the boiling moment of liquid cooked on an electric or gas cooking appliance. A device for detection of boiling moment of liquids is designed for domestic use. Temperature stabilisation is a characteristic feature of the boiling process. If the environmental conditions do not change, temperature stabilises at boiling temperature. Said process is also accompanied by an increased production of steam - the intensity of vaporisation becomes significantly stronger. Boiling is also characterised by increased cavitation, that is the formation of bubbles of steam and gases in the volume of liquid and related turbulent phenomena such as a disturbance of the surface of liquid, generation of related sounds and vibrations. During the process, parameters of liquid other than temperature also become stabilised at the boiling moment but due to the turbulences in the whole liquid volume their measurement at boiling moment may be strongly hindered.

In prior art there are known methods of detection of the boiling of liquids using various phenomena. In patent US 3828164 "Cooking device with an electrical temperature control" and US 4401884 "Method of controlling heating in food heating apparatus including infrared detecting system" a device was designed that used the process of temperature stabilisation. This is a particularly realistic method when we deal with a closed container where an appropriately accurate sensor may be mounted. A patent document US 5889264 discloses a solution based on an increased production of steam. This method is particularly reasonable in the case of closed containers and has been successfully used in electric kettles for years. Another solution in prior art is a device measuring acoustic signal generated during the boiling process (US 6118104 "Method and apparatus for boil state detection based on acoustic signal features"). Other solutions employ a phenomenon of vibrations (EP0479091 "Boiling detecting devices for a stole").

In document US 6299920 "Systems and methods for non-invasive assessment of cooked status of food during cooking", infrared and ultrasounds were employed to assess the cooked status of food and a system was provided for monitoring and controlling the supply of heat to food during cooking. Patent documents JP03112521 and US20040195231 disclose a device employing a system of sensors for measurement of water temperature, however the sensors according to the foregoing inventions are closely connected with the cooking container and their creators clearly indicate the measurement of the speed of sound or its attenuation and not the measurement of changes in movement of the container or motion of the liquid surface.

WO 2009/060192 discloses a liquid heating vessel with a device for the detection of the boiling moment, the device comprising an emitter and a receiver located inside the reservoir of the vessel. In a variant of said vessel, ultrasonic energy is emitted by the emitter.

DE 3410465 discloses a domestic cooking appliance comprising a cooking hob and a device for the detection of the boiling moment. Said device comprises an ultrasound emitter and an ultrasound receiver located below the cooking hob. The boiling moment is detected monitoring the changes of the frequency of the signal received by the receiver.

JP 2005050713 also discloses a domestic cooking appliance comprising a cooking hob and a device for the detection of the boiling moment. Said device comprises an ultrasound emitter/receiver located below the cooking hob.

The present invention concerns a domestic cooking appliance comprising a cooking hob and a device for the detection of the boiling moment of liquids in cooking pots. The device comprises a transmitting transducer generating ultrasound waves, a generator supplying the transmitter, a demodulator, a controlling and analysing system, and a receiving transducer receiving ultrasound waves, so that ultrasound waves are transmitted by the transmitting transducer towards the pot with liquid that is being cooked and then the reflected ultrasound waves are received by means of the receiving transducer and compared with the transmitted waves, the observed changes in the phase and amplitude of the received sound wave resulting from turbulence occurring during boiling of liquid indicating the boiling moment of liquid. The device is located in a cooker hood or on a support that may be moved so that the cooking pot that the device user would like to monitor is within its range.

A wave transmitted by an ultrasound head reflects off the surface of liquid, lid or cooking pot and, after it is received, it is subjected to analysis detecting changes caused by the boiling process. When the substance is far from the boiling moment a reflected and dispersed wave does not change its amplitude or phase in time, or such changes are small - the surface of liquid or the lid rests or changes slowly. When the substance begins to boil there appears clear turbulence causing rapid signal fluctuations.

In one embodiment, the same ultrasound transducer is employed for transmitting and receiving the wave. In another embodiment, separate ultrasound transducers are employed for receiving and transmitting the wave.

The device according to the invention therefore comprises a transmitting transducer and receiving transducer, or one transmitting-receiving transducer.

The controlling and analysing system detects the boiling moment on the basis of the analysis of the variation of the received signal. The device according to the invention reacts to turbulence occurring at the boiling moment causing movements of the cooking pot, lid and boiling liquid.

The proposed solution provides an active sensor as opposed to a number of currently used and described in literature passive sensors which only measure a given parameter (temperature, presence of steam) or receive signal (sounds, vibrations). The device according to the invention employs ultrasound waves encompassing one cooking pot within their range. The principle of operation employs the phenomenon of generation of vibrations and turbulence during the boiling process. The device according to the invention transmits an ultrasound wave and then receives a wave modulated by vibrations and turbulence (modulation in time and space). The boiling moment of liquid is detected on the basis of a comparison of signal variation: at the moment close to boiling, signal variation rapidly increases, which makes it possible to detect that moment. There also appear clear periodic signals.

The device for the detection of the boiling moment of liquids according to the invention is easy to use, durable and is not troublesome.

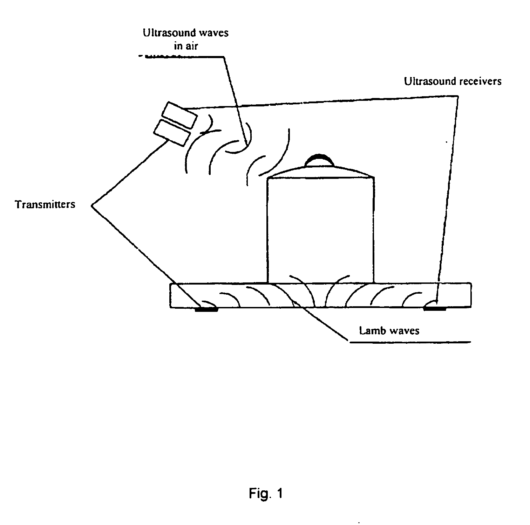

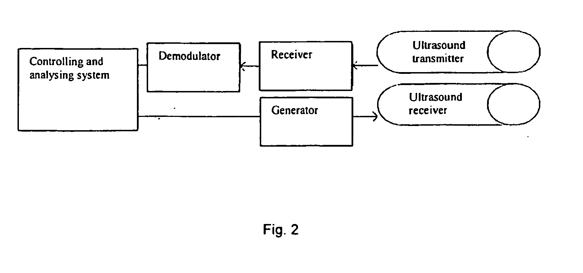

The solution according to the invention is presented, by way of example, in a drawing where fig 1. shows a device for the detection of the boiling moment of liquid employing sound waves propagating in air, and fig. 2 shows a diagram of a device for detection of boiling moment of liquid based on a measurement of modulated waves propagating in air.

### Example

### Detection of the boiling moment of liquids employing sound waves propagating in air.

An ultrasound head transmits a wave towards a cooking pot, lid or open surface of liquid. When the substance is far from the boiling moment, a reflected and dispersed wave does not change its amplitude or phase in time, or such changes are small - the surface of liquid or the lid rests or changes slowly. When the substance begins to boil there appears clear turbulence causing rapid signal fluctuations. A device employing the foregoing principle of operation is located in the cooker hood or on a support that may be moved so that the cooking container that the device user would like to monitor is within its range.

## Claims

1. Domestic cooking appliance comprising a cooking hob and a device for the detection of the boiling moment of liquids in cooking pots, the device comprising a transmitting transducer generating ultrasound waves, a generator supplying the transmitter, a demodulator, a controlling and analysing system, and a receiving transducer receiving ultrasound waves, so that ultrasound waves are transmitted by the transmitting transducer towards the pot with liquid that is being cooked, and then the reflected ultrasound waves are received by means of the receiving transducer and compared with the transmitted waves, the observed changes in the phase and amplitude of the received sound wave resulting from turbulence occurring during boiling of liquid indicating the boiling moment of liquid, **characterised in that** said device is located in a cooker hood or on a support that may be moved so that the cooking pot that the device user would like to monitor is within its range.

2. Domestic cooking appliance according to claim 1, wherein the same transducer is employed to transmit and receive waves.

3. Domestic cooking appliance according to claim 1, wherein separate transducers are employed to transmit and receive waves.

## Patentansprüche

1. Haushaltskochgerät, umfassend ein Kochfeld und eine Vorrichtung zum Erfassen des Siedepunktes von Flüssigkeiten in Kochtöpfen, wobei die Vorrichtung einen Sendewandler, der Ultraschallwellen erzeugt, einen Generator, der den Sender versorgt, einen Demodulator, ein Steuer- und Analysesystem, und einen Empfangswandler, der Ultraschallwellen empfängt, umfasst, so dass Ultraschallwellen von dem Sendewandler an den Kochtopf mit der kochenden Flüssigkeit gesendet werden, und dann die reflektierten Ultraschallwellen anhand des Empfangswandlers empfangen werden und mit den gesendeten Wellen verglichen werden, wobei sich die beobachteten Phasen- und Amplitudenänderungen der empfangenen Schallwelle aus einer Turbulenz ergeben, die beim Kochen der Flüssigkeit auftritt und den Siedepunkt der Flüssigkeit angibt, **dadurch gekennzeichnet, dass** sich die Vorrichtung in einer Abzugshaube oder auf einem Träger befindet, der bewegt werden kann, so dass sich der Kochtopf, den der Benutzer der Vorrichtung überwachen möchte, in der Reichweite desselben befindet.

2. Haushaltskochgerät nach Anspruch 1, wobei der gleiche Wandler verwendet wird, um Wellen zu senden und zu empfangen.

3. Haushaltskochgerät nach Anspruch 1, wobei getrennte Wandler verwendet werden, um Wellen zu senden und zu empfangen.

## Revendications

1. Appareil de cuisson domestique, comprenant une table de cuisson et un dispositif pour la détection du point d'ébullition de liquides dans des casseroles, le dispositif comprenant un transducteur émetteur générant des ondes ultrasonores, un générateur alimentant l'émetteur, un démodulateur, un système de commande et d'analyse, et un transducteur récepteur recevant des ondes ultrasonores, de sorte que des ondes ultrasonores sont émises par le transducteur émetteur vers la casserole avec le liquide en cours de cuisson, et ensuite les ondes ultrasonores réfléchies sont reçues au moyen du transducteur récepteur et comparées aux ondes émises, les changements observés en phase et amplitude de l'onde sonore reçue résultant d'une turbulence qui se produit pendant l'ébullition du liquide indiquant le moment d'ébullition du liquide, **caractérisé en ce que** ledit dispositif se trouve dans une hotte aspirante ou sur un support qui peut être déplacé de sorte que la casserole que l'utilisateur du dispositif souhaite surveiller se trouve à portée de celui-ci.

2. Appareil de cuisson domestique selon la revendication 1, dans lequel le même transducteur est utilisé pour émettre et recevoir des ondes.

3. Appareil de cuisson domestique selon la revendication 1, dans lequel des transducteurs séparés sont utilisés pour émettre et recevoir des ondes.
